# EUROPÄISCHE PATENTSCHRIFT

(11) **EP 1 861 278 B1**
(45) Veröffentlichungstag und Bekanntmachung des Hinweises auf die Patenterteilung: **18.05.2011**
(21) Anmeldenummer: 06723285.0
(22) Anmeldetag: 08.03.2006
(51) Int. Cl.: B60N 2/00, B60N 2/48

(54) **LEHNE FÜR EINEN FAHRZEUGSITZ**
BACKREST FOR A VEHICLE SEAT
DOSSIER POUR UN SIEGE DE VEHICULE

(30) Priorität: 08.03.2005 DE 102005010594
(43) Veröffentlichungstag der Anmeldung: 05.12.2007
(73) Patentinhaber: Brose Fahrzeugteile GmbH & Co. Kommanditgesellschaft, Hallstadt, 96103 Hallstadt (DE)
(72) Erfinder: SZABLEWSKI, Piotr, 42399 Wuppertal (DE)
(74) Vertreter: FDST Patentanwälte
(86) Internationale Anmeldenummer: PCT/EP2006/002125
(87) Internationale Veröffentlichungsnummer: WO 2006/094784

(56) Entgegenhaltungen:
- EP-A- 1 375 246
- DE-C1- 19 916 804
- US-A- 5 848 661
- US-A- 6 042 145

## Beschreibung

Die Erfindung betrifft eine Lehne für einen Fahrzeugsitz nach dem Oberbegriff des Anspruchs 1.

Aus DE 199 16 804 C1 ist eine Vorrichtung zur Justierung einer Fahrzeug-Kopfstütze in Bezug auf die Kopflage eines Fahrgastes, mit einem in der Kopfstütze angeordneten Sensor zum Erkennen der Kopflage bekannt. Der Sensor enthält zwei Kondensatorplatten, die übereinander angeordnet sind und die Teil eines Kondensators sind, in dem der Kopf des Fahrgastes als Dielektrikum wirkt. Da es Leute mit mehr oder weniger ausgeprägten Hinterköpfen bzw. mit mehr oder weniger dicken Hälsen gibt, ist eine Justierung der Kopfstütze so nicht möglich.

Aufgabe der Erfindung ist es daher, eine Lehne für einen Fahrzeugsitz nach dem Oberbegriff des Anspruchs 1 zu schaffen, die eine verbesserte Einstellung der Kopfstütze ermöglicht. Diese Aufgabe wird durch die Merkmale des Anspruchs 1 gelöst.

Hierdurch wird eine Lehne für einen Fahrzeugsitz mit einer Kopfstütze geschaffen, die in ihrer Lage gegenüber der Lehne verstellbar ist, um die Kopfstütze für eine auf dem Fahrzeugsitz sitzende Person in der Höhe und im Abstand zu justieren. Die dazu verwendeten mindestens zwei kapazitiven Näherungssensoren bilden jeweils einen Kondensator mit dem Kopf des Menschen. Diese Kondensatoren bestehen also jeweils aus der Elektrode Kopf und der jeweiligen Elektrode eines der mindestens zwei kapazitiven Näherungssensoren. Durch eine Detektion der Kapazität der Kondensatoren kann die Kopfstütze justiert werden. Die Position der Kopfstütze zum Kopf wird angezeigt, so daß die Kopfstütze in eine justierte Endposition ausgerichtet werden kann, die optimal in Bezug auf Höhe und Abstand zum Kopf ist. Dadurch kann eine unfallrelevante Einstellung der Kopfstütze erreicht werden.

Vorzugsweise wird eine Veränderung der Kapazität detektiert, um in Abhängigkeit dieser Veränderung die Kopfstütze zu verstellen. Die Kapazitäten jeweils der Kondensatoren aus Kopf und Näherungssensor dienen dabei als Maß für die Verstellung. Dabei kann die Kapazität der Kondensatoren miteinander verglichen werden.

Bevorzugt ist dabei, daß die mindestens zwei kapazitiven Näherungssensoren je eine Elektrode aufweisen, deren geometrische Abmessungen und vorbestimmten zu detektierenden Kapazitäten ein "Feldbild" bilden, mit dem ein Kopfabschnitt nachformbar ist, um die Höhe der Kopfstütze und den Abstand der Kopfstütze vom Kopf der Person zu justieren. Ohne die Anwesenheit des Kopfes ist das Feldbild der mindestens zwei kapazitiven Näherungssensoren nicht gerichtet. Bei Anwesenheit eines Kopfes werden die Feldlinien gerichtet und eine Kapazität der mindestens zwei kapazitiven Näherungssensoren mit dem Kopf stellt sich ein, die zur Anzeige einer justierten Endposition oder als Verstellung für einen Antrieb in die justierte Endposition verwendet wird.

Eine für die Betätigung eines Antriebes zum Verstellen der Kopfstütze vorgesehene Steuerung kann die erfaßten Kapazitäten als Ist-Größen mit mindestens einer vorgebbaren Soll-Größe der Kapazität für eine justierte Endposition der Kopfstütze vergleichen. Die Steuerung kann dazu eine Signalaufbereitungs- und Signalverarbeitungselektronik aufweisen. Um die justierte Endposition der Kopfstütze zu erreichen, kann die Kopfstütze einen wählbaren Suchlauf durchlaufen.

Die Steuerung kann eine Kalibrierungseinheit aufweisen, die die Kapazität zwischen Kopf und Näherungssensor mitbestimmende äußere Parameter, wie Material, Luftfeuchtigkeit etc., berücksichtigt. Es kann vorgesehen sein, daß die Kalibrierungseinheit eine Kalibrierung dann durchführt, wenn das Fahrzeug entriegelt und dabei festgestellt wird, daß der Fahrzeugsitz nicht belegt ist. Die Nullinie der Kondensatoren bzw. die Referenzkapazität kann vorzugsweise dann kalibrierbar werden, da keine Gegenelektrode für die kapazitiven Näherungssensoren auf dem Fahrzeugsitz vorhanden ist. Die Entriegelung des Fahrzeugs bezieht sich dabei auf den Austausch der Information für die Zugangsberechtigung, die beispielsweise mechanisch, über Funkbetätigung oder über "keyless-go" erfolgen kann.

Ferner ist bevorzugt, daß eine Kompensation mit einer Temperatur-Kennlinie für die Kondensatoren vorgesehen ist, die Veränderungen der Kapazität aufgrund von Temperaturschwankungen berücksichtigt. Dazu kann eine Temperaturmessung im Innenraum des Fahrzeugs verwendet werden, um eine Soll-Größe der Kapazität in Abhängigkeit von der Temperatur zu verändern.

Vorzugsweise kann die Kalibrierungseinheit für eine Kapazitätsbestimmung eines durch die mindestens zwei Näherungssensoren gebildeten Kondensators ausgestaltet sein. Die Kapazitätsbestimmung des aus den mindestens zwei Näherungssensoren gebildeten Kondensators wird bevorzugt dann durchgeführt, wenn das Fahrzeug entriegelt und dabei festgestellt wird, daß der Fahrzeugsitz nicht belegt ist. Auf diese Weise kann der Einfluß von Materialien in und an der Kopfstütze, wie unterschiedlichen Schäumen, Kunststoffen oder diversen anderen Materialien, bei einer Kalibrierung berücksichtigt werden, ohne daß sich eine Person auf dem Fahrzeugsitz befindet.

Zusammenfassend ist festzuhalten, daß bei der erfindungsgemäßen Lehne die Kopfstütze aus einer Ausgangsposition verfahrbar ist, um anhand der Kapazitäten der Kondensatoren aus Kopf als einer Elektrode und jeweils der Elektrode eines der mindestens zwei Näherungssensoren als anderer Elektrode ein Maß für die Stellung der Kopfstütze relativ zum Kopf zu erhalten. Mit dem kapazitiven Näherungssensor kann eine Art elektrische Schablone an der Kopfstütze generiert werden und die Kopfstütze so lange verfahren werden, bis der Kopf in die elektrische Schablone paßt. Das Passen der elektrischen Schablone wird dadurch ermittelt, daß bestimmte vorgebbare Kapazitäten der Kondensatoren erfaßt werden, die abhängig sind vom Abstand und der Lage des Kopfes relativ zur Elektrode der mindestens zwei Näherungssensoren.

Weitere Ausgestaltungen der Erfindung sind der nachfolgenden Beschreibung und den Unteransprüchen zu entnehmen.

Die Erfindung wird nachstehend anhand von in den beigefügten schematischen Abbildungen des Ausführungsbeispiels näher erläutert.
Fig. 1 zeigt schematisch eine Ausführungsform einer Rückenlehne mit Kopfstütze eines Fahrzeugsitzes.
Fig. 2 zeigt schematisch im Profil in einer Schnittdarstellung Form und Lage eines kapazitiven Näherungssensors in der Kopfstütze der Ausführungsform gemäß Fig. 1.
Fig. 3 zeigt schematisch in einer Ansicht von vorn in einer Teilschnittdarstellung die Kopfstütze gemäß Fig. 2.
Fig. 4 zeigt schematisch und ausschnittweise eine zusätzliche Ausführungsform.

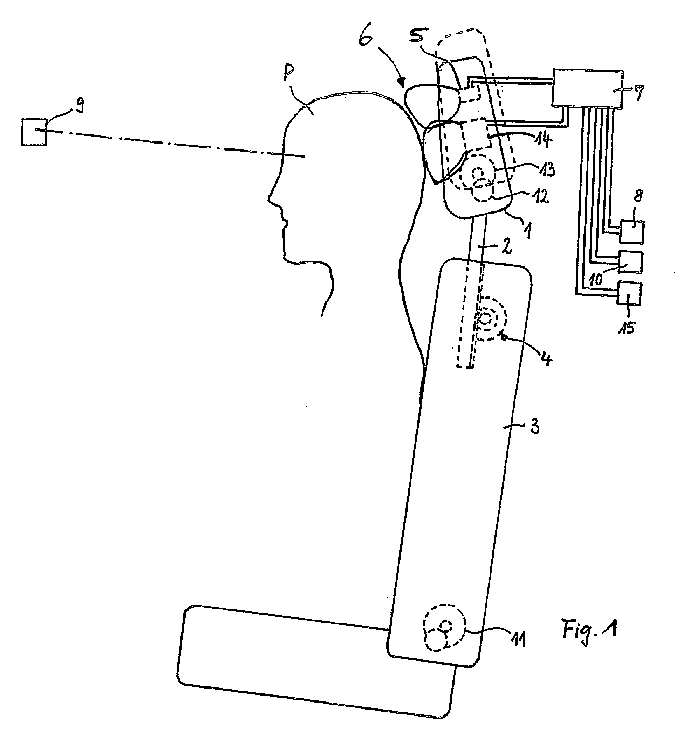

Fig. 1 zeigt eine Lehne 3 für einen Fahrzeugsitz mit einer Kopfstütze 1, die höhenmäßig gegenüber der Lehne 3, hier der Rückenlehne eines Fahrzeugsitzes, verstellbar ist. In der Kopfstütze 1 sind zwei Sensoren zum Erkennen der Position des Kopfes P einer auf dem Fahrzeugsitz sitzenden Person relativ zur Kopfstütze 1 und zum Steuern eines Antriebes 4 vorgesehen. Der Antrieb 4 verfährt die Kopfstütze 1 aus einer Ausgangsposition in eine justierbare Endposition. Hierdurch soll die Kopfstütze 1 an unterschiedliche Personen, die auf dem Fahrzeugsitz Platz nehmen können, angepaßt werden. Dazu sind die in der Kopfstütze 1 angeordneten Sensoren kapazitive Näherungssensoren 5, 14, die in Abhängigkeit der erfaßten Kapazität, die sich jeweils auf den von dem Kopf P und den Näherungssensoren 5, 14 gebildeten Elektroden befindet, auslösen. Die erfaßten Kapazitäten dienen dazu, den Antrieb 4 zu steuern. Der Näherungssensor 5 detektiert eine Veränderung der Kapazitäten beim Verstellen der Kopfstütze 1.

Damit die Kapazitäten kopfformabhängig bestimmbar sind, weisen die kapazitiven Näherungssensoren 5, 14 jeweils eine Elektrode auf, deren geometrische Abmessungen ein einen Kopfabschnitt nachformendes Feldbild 6 bilden.

Zur Steuerung des Antriebs 4 ist eine Steuerung 7 vorgesehen, die erfaßte Kapazitäten als Ist-Größen mit mindestens einer vorgebbaren Soll-Größe der Kapazitäten für eine justierte Endposition vergleicht.

Die vorgebbare Soll-Größe kann der justierten Endposition zugeordnet werden. Um diese justierte Endposition zu erreichen, kann der Antrieb 4 mittels einer Steuerung 7 derart betätigbar sein, daß die Kopfstütze 1 einen wählbaren Suchlauf durchläuft.

Zusätzlich oder alternativ zu einer automatischen Verstellung der Kopfstütze 1 durch einen Antrieb 4 kann vorgesehen sein, daß die Position der Kopfstütze 1 in Bezug auf den Kopf der auf dem Fahrzeugsitz sitzenden Person P angezeigt wird. Die erfaßten Kapazitäten können als Ist-Größen im Vergleich mit mindestens einer vorgebbaren Soll-Größe der Kapazitäten bei der Anzeige als Maß für die Position der Kopfstütze 1 in Bezug auf den Kopf hinsichtlich Abstand und Höhe dienen.

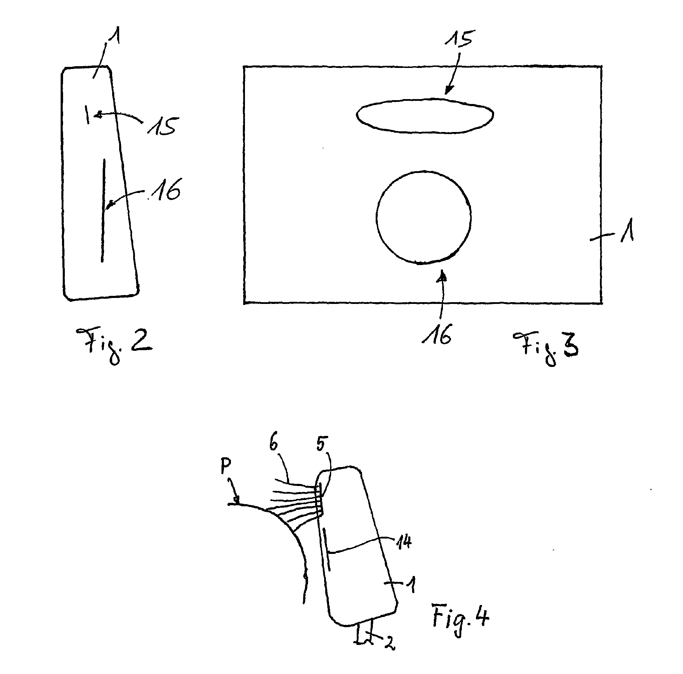

Wie insbesondere aus Fig. 2 ersichtlich ist, können Näherungssensoren 5, 14 zum Kopf hin geformte Elektroden 15, 16 aufweisen. Sind wie in Fig. 2 dargestellt zwei Elektroden 15, 16 vorgesehen, sind diese vorzugsweise aufeinander zugeneigt zum Kopf P hin ausgerichtet. Die Steuerung 7 kann eine Signalaufbereitungs- und Signalverarbeitungselektronik aufweisen. Ferner kann eine Kalibrierungseinheit vorgesehen sein.

Bei der in Fig. 1 dargestellten Ausführungsform ist eine Kopfstütze 1 über Führungsstangen 2 in einer Rückenlehne 3 eines Fahrzeugsitzes, etwa eines Kraftfahrzeugsitzes, mittels eines Antriebs 4, der elektrisch, pneumatisch oder hydraulisch sein kann, höhenverstellbar geführt. Eine Person P lehnt sich mit ihrem Rücken gegen die Vorderseite der Rückenlehne 3, während sich idealerweise der Kopf P der Person mit seinem zur Kopfstütze 1 nächsten Bereich etwa in der Mitte der Kopfstütze 1 und in einem optimalen Abstand hierzu, d.h. nicht daran anliegend befinden soll. Zweckmäßigerweise ist hierbei die Kopfstütze 1 in Richtung auf den Kopf der auf dem Fahrzeugsitz sitzenden Person P bzw. zur Vorderseite der Rückenlehne 3 geneigt angeordnet.

Im vorderen, d.h. dem Kopf zugewandten Teil der Kopfstütze 1 sind zwei kapazitive Näherungssensoren 5, 14 angeordnet, die ein Feldbild 6 aufweisen, das an ein durchschnittliches Profil eines menschlichen Hinterkopfes angepaßt ist. Die Anpassung des Feldbildes 6 an das theoretische Profil eines menschlichen Hinterkopfes erfolgt durch Form und Lage der Elektroden der Näherungssensoren 5, 14 und eine den Näherungssensoren 5, 14 jeweils zugeordnete Kapazität.

Eine Elektrode 15,16 der Näherungssensoren 5, 14 ist jeweils eine Elektrode eines Kondensators und der Kopf der auf dem Fahrzeugsitz sitzenden Person P ist eine weitere Elektrode des Kondensators. Die Kapazität des Kondensators hängt im wesentlichen nur von den geometrischen Abmessungen und der Anordnung der Elektroden, d.h. Kopf der Person P und Elektrode 15, 16 der Näherungssensoren 5, 14, zueinander ab. Die Näherungssensoren 5,14 erfassen die Kapazität, die sich auf den Elektroden 15, 16 der Näherungssensoren 5, 14, der je eine Elektrode des Kondensators mit dem Kopf ist, befindet.

Genauer bildet die auf dem Fahrzeugsitz sitzende Person P mit den Elektroden 15, 16 der Näherungssensoren 5, 14 jeweils einen Kondensator. Daraus ergibt sich eine Kapazität, deren Größe gemessen wird.

Da die Näherungssensoren 5, 14 mit seiner jeweiligen Elektrode 15,16 an das Profil des Hinterkopfes der Person P angepaßt ist, sind die Kapazitäten der Kondensatoren ein Maß für die Fehlpositionierung und/oder das Verstellen der Kopfstütze 1. Bei einer bestimmten, für den jeweiligen Näherungssensor 5, 14 vorgegebenen Kapazität löst der entsprechende Näherungssensor 5, 14 aus. Wenn die beiden Näherungssensoren 5, 14 der Fig. 1 auslösen ist eine justierte Endposition erreicht. Aus einem Vergleich zwischen der momentanen erfaßten Kapazität des Näherungssensors 5, 14 und der vorgegebenen Kapazität für die justierte Endposition kann eine Fehlpositionierung bzw. allgemein die Position des Kopfes der auf dem Fahrzeugsitz sitzenden Person P angezeigt werden. Die Anzeige der Position des Kopfes in Bezug auf Höhe und Abstand kann getrennt erfolgen.

Die Näherungssensoren 5, 14 sind mit der Steuerung 7, die beispielsweise in der Rückenlehne 3 oder in der Kopfstütze 1 oder auch anderswo untergebracht ist, verbunden, mit der der Antrieb 4 entsprechend ansteuerbar ist.

Um den Abstand der Kopfstütze 1 bezüglich des Abstands des Kopfes der Person P optimal einzustellen kann die Rückenlehne 3 gegebenenfalls auch horizontal geteilt sein, wobei die beiden Teile, von denen das obere die Kopfsstütze 1 trägt, gegeneinander in der Neigung verstellbar sein können.

Über die Steuerung 7 kann eine optimale Einstellung der Kopfstütze 1 derart erfolgen, daß sowohl die Höhe als auch der Abstand zum Kopf unabhängig von der Stellung der Rückenlehne 3 (allerdings soweit deren Neigung überhaupt eine Einstellung ermöglicht) gegebenenfalls iterativ optimiert werden. Dazu kann die Kopfstütze 1 auch translatorisch anstelle einer Neigungsverstellung der Kopfstütze 1 auch in Richtung vom Kopf weg bzw. auf den Kopf der Person P zu bewegbar sein, um den Abstand zur Kopfstütze 1 einstellen zu können. Alternativ kann die Kopfstütze 1 in Hülsen an der Rückenlehne 3 verschwenkbar sein.

Um die Kopfstütze 1 individuell auf eine auf dem Fahrzeugsitz Platz nehmende Person einzustellen, ist in der Regel ein Aktivierungsschalter 8 zu betätigen, da bei unverändertem Benutzer keine erneute Einstellung benötigt wird. Die Aktivierung bewirkt ein Verfahren der Kopfstütze 1 in der Höhe solange, bis die bestimmten vorgegebenen Kapazitäten in der Steuerung 7 erfaßt werden. Die Verstellung der Kopfstütze 1 wird an dieser Stelle beendet.

Wenn der Näherungssensor 5 während des höhenmäßigen Verfahrens der Kopfstütze 1 nicht anspricht, d.h. feststellt, daß die Kopfstütze 1 durch eine höhenmäßige Verstellung nicht in eine optimale Position zum Kopf gebracht werden kann, befindet sich der Kopf und/oder die Rückenlehne 3 in einer offensichtlich ungünstigen Neigungsstellung. Für den ersten Fall kann ein von der Person P anzuvisierendes (Anzeige-)Element 9 vorgesehen sein, um den Kopf in eine entsprechende Position zu bringen. Für den zweiten Fall kann eine Anzeige vorgesehen sein, die der Person P signalisiert, daß sie die Rückenlehne 3 entsprechend manuell oder über die Betätigung eines Schalters (Tasters) 10 für einen Antrieb 11 zu verstellen hat, und/oder es kann eine automatische, über die Steuerung 7 steuerbare, motorische Verstellung der Rückenlehne 3 vorgesehen sein, bis die optimale Position der Kopfstütze 1 zum Kopf der Person P erreicht ist und die bestimmte vorgegebene Kapazität in der Steuerung 7 erfaßt wird.

Für den Fall, daß die Kopfstütze 1 nicht in ihrer Neigung verstellbar ist, ist es jedenfalls vorteilhaft, wenn sie zur Vorderseite der Rückenlehne 3 und damit zum Kopf hin geneigt angeordnet ist.

Für den Fall, daß die Kopfstütze 1 nur manuell verstellbar ist, läßt sich das Element 9 als Anzeigeelement für eine unzweckmäßige Positionierung der Kopfstütze 1 verwenden, das dies solange anzeigt, bis die Näherungssensoren 5,14 ansprechen und damit die Kopfstütze 1 auf die richtige Höhe und den richtigen Abstand eingestellt ist.

Die Kopfstütze 1 ist zusätzlich um eine Horizontalachse 12 in ihrer Neigung in Bezug auf die Rückenlehne 3 mittels eines Antriebs 13 verstellbar, vgl. Fig. 1 oder manuell verstellbar.

Die Elektroden 15, 16 sind übereinander, bezogen auf die Breite der Kopfstütze 1 mittig zu dieser in der Kopfstütze 1 angeordnet.

Das sich aus den beiden Elektroden 14, 15 ergebende Feldbild 6 bildet die durchschnittliche Hinterkopfform der auf dem Fahrzeugsitz Platz nehmenden Person P nach, so daß eine "elektrische Schablone" für den Hinterkopf der Person P gebildet wird und die Kapazität der beiden Elektroden 15, 16 in Abhängigkeit von Abstand und Lage des Kopfes als Teil eines Kondensators ein Maß für die Fehlpositionierung und/oder das Verstellen der Kopfstütze 1 ist. Bei einer bestimmten vorgebbaren Kapazität der Näherungssensoren 4, 14 lösen diese aus.

Bevorzugt werden die Elektroden 14, 15 im Vergleich zu der dem Kopf zugewandten Fläche der Kopfstütze 1 entsprechend zurückversetzt, um bei einem Aufprall des Kopfes keine Gefährdung hiervon zu bewirken.

Beispielsweise in einem Kraftfahrzeug kann es vorkommen, daß bei längerer Fahrt die Sitzposition geändert wird. Damit dies nicht grundsätzlich zu einer Änderung der Einstellung der Kopfstütze 1 führt, kann es zweckmäßig sein, wenn dadurch bewirkte Änderungen der Signale der Elektroden 14, 15 erst nach Ablauf einer vorbestimmten Zeit zu einer Reaktion durch die Steuerung 7 führen.

## Patentansprüche

1. Lehne für einen Fahrzeugsitz mit einer Kopfstütze (1), die höhenmäßig gegenüber der Lehne verstellbar ist, und einem in der Kopfstütze (1) angeordneten Sensor zum Erkennen der Position des Kopfes einer auf dem Fahrzeugsitz sitzenden Person relativ zur Kopfstütze (1) und zum Anzeigen einer justierten Endposition, wobei in der Kopfstütze (1) mindestens zwei Sensoren angeordnet sind, **dadurch gekennzeichnet, daß** die zwei Sevisoren als kapazitive Näherungssensoren (5, 14) ausgebildet sind, die in Abhängigkeit der erfaßten Kapazitäten, die sich auf den von dem Kopf (P) und jeweils einem der mindestens zwei Näherungssensoren (5, 14) gebildeten Elektroden als Kapazität befinden, die Position der Kopfstütze (1) in Bezug zum Kopf (P) anzeigen.

2. Lehne nach Anspruch 1, **dadurch gekennzeichnet, daß** die mindestens zwei kapazitiven Näherungssensoren (5, 14) ein Verstellen der Kopfstütze (1) durch eine Veränderung der Kapazität detektieren.

3. Lehne nach Anspruch 1 oder 2, **dadurch gekennzeichnet, daß** die mindestens zwei kapazitiven Näherungssensoren (5, 14) mindestens einen Antrieb (4) zum Erreichen der justierten Endposition steuern.

4. Lehne nach Anspruch 3, **dadurch gekennzeichnet, daß** eine mit dem mindestens einen Antrieb (4) verbundene Steuerung (7) vorgesehen ist.

5. Lehne nach einem der Ansprüche 1 bis 4, **dadurch gekennzeichnet, daß** die mindestens zwei kapazitiven Näherungssensoren (5, 14) jeweils eine Elektrode (15, 16) aufweisen, die zusammengesetzt ein einen Kopfabschnitt nachformendes Feldbild (6) bilden.

6. Lehne nach einem der Ansprüche 3 oder 4; **dadurch gekennzeichnet, daß** eine Steuerung (7) für mindestens einen Antrieb (4) vorgesehen ist, die erfaßte Kapazitäten als Ist-Größen mit jeweils mindestens einer vorgebbaren Soll-Größe der Kapazität für eine justierte Endposition vergleicht.

7. Lehne nach einem der Ansprüche 3, 4 oder 6, **dadurch gekennzeichnet, daß** der Antrieb (4) mittels einer Steuerung (7) betätigbar ist, die einen wählbaren Suchlauf der Kopfstütze (1) auslöst.

8. Lehne nach einem der Ansprüche 4, 6 oder 7, **dadurch gekennzeichnet, daß** die Steuerung (7) eine Signalaufbereitungs- und Signalverarbeitungselektronik aufweist.

9. Lehne nach einem der Ansprüche 4, 6, 7 oder 8, **dadurch gekennzeichnet, daß** die Steuerung (7) eine Kalibrierungseinheit aufweist.

10. Lehne nach Anspruch 9, **dadurch gekennzeichnet, daß** die Kalibrierungseinheit mit einer Vorrichtung zum Erfassen einer Entriegelung des Fahrzeugs verbunden ist, und die Referenzkapazität bei Entriegelung des Fahrzeugs erfaßbar ist.

11. Lehne nach Anspruch 9 oder 10, **dadurch gekennzeichnet, daß** eine Vorrichtung zur Kompensation mit einer Temperatur-Kennlinie der jeweiligen Kondensatoren vorgesehen ist.

12. Lehne nach einem der Ansprüche 9 bis 11, **dadurch gekennzeichnet, daß** die Kalibriereinheit für eine Kapazitätsbestimmung eines durch die mindestens zwei Näherungssensoren (5, 14) gebildeten Kondensators ausgestaltet ist, wenn eine Entriegelung des Fahrzeugs erfaßt wird.

## Claims

1. Backrest for a vehicle seat with a head restraint (1) which can be adjusted in terms of height in relation to the backrest, and with a sensor, which is arranged in the head restraint (1), for identifying the position of the head of a person sitting on the vehicle seat relative to the head restraint (1) and for indicating an adjusted end position, wherein at least two sensors are arranged in the head restraint (1), **characterized in that** the two sensors are designed as capacitive proximity sensors (5, 14) which indicate the position of the head restraint (1) with respect to the head (P) depending on the detected capacitances which are found in the form of a capacitance on the electrodes formed by the head (P) and in each case one of the at least two proximity sensors (5, 14).

2. Backrest according to Claim 1, **characterized in that** the at least two capacitive proximity sensors (5, 14) detect an adjustment of the head restraint (1) by a change in the capacitance.

3. Backrest according to Claim 1 or 2, **characterized in that** the at least two capacitive proximity sensors (5, 14) control at least one drive (4) for reaching the adjusted end position.

4. Backrest according to Claim 3, **characterized in that** a controller (7) which is connected to the at least one drive (4) is provided.

5. Backrest according to one of Claims 1 to 4, **characterized in that** the at least two capacitive proximity sensors (5, 14) have a respective electrode (15, 16) which together form a field image (6) copying a head portion.

6. Backrest according to either of Claims 3 and 4, **characterized in that** a controller (7) is provided for at least one drive (4), the controller comparing detected capacitances as actual variables with in each case at least one predeterminable desired variable of the capacitance for an adjusted end position.

7. Backrest according to one of Claims 3, 4 or 6, **characterized in that** the drive (4) can be actuated by means of a controller (7) which triggers a selectable search run of the head restraint (1).

8. Backrest according to one of Claims 4, 6 or 7, **characterized in that** the controller (7) has signal-regenerating and signal-processing electronics.

9. Backrest according to one of Claims 4, 6, 7 or 8, **characterized in that** the controller (7) has a calibrating unit.

10. Backrest according to Claim 9, **characterized in that** the calibrating unit is connected to a device for detecting unlocking of the vehicle, and the reference capacitance can be detected upon unlocking of the vehicle.

11. Backrest according to Claim 9 or 10, **characterized in that** a device is provided for compensating for the respective capacitors by means of a temperature characteristic curve.

12. Backrest according to one of Claims 9 to 11, **characterized in that** the calibrating unit is configured to determine the capacitance of a capacitor formed by the at least two proximity sensors (5, 14) when unlocking of the vehicle is detected.

## Revendications

1. Dossier pour un siège de véhicule comprenant un appuie-tête (1) qui est réglable en hauteur par rapport au dossier, et comprenant également un détecteur agencé dans l'appuie-tête (1) et destiné à reconnaître ou détecter la position de la tête d'une personne assise sur le siège de véhicule par rapport à l'appuie-tête (1), et à indiquer une position finale ajustée, au moins deux détecteurs étant agencés dans l'appuie-tête (1), **caractérisé en ce que** les deux détecteurs sont réalisés sous la forme de détecteurs de proximité capacitifs (5, 14) indiquant la position de l'appuie-tête (1) par rapport à la tête (P), en fonction des capacités relevées, qui s'établissent sur les électrodes formées par la tête (P) et respectivement l'un desdits au moins deux détecteurs de proximité (5, 14) en tant que capacité ou condensateur.

2. Dossier selon la revendication 1, **caractérisé en ce que** lesdits au moins deux détecteurs de proximité capacitifs (5, 14) détectent un réglage ou déplacement de l'appuie-tête (1), par une variation de la capacité.

3. Dossier selon la revendication 1 ou la revendication 2, **caractérisé en ce que** lesdits au moins deux détecteurs de proximité capacitifs (5, 14) commandent au moins un moyen d'entraînement (4) pour atteindre la position finale ajustée.

4. Dossier selon la revendication 3, **caractérisé en ce qu'**il est prévu un système de commande (7) relié au dit au moins un moyen d'entraînement (4).

5. Dossier selon l'une des revendications 1 à 4, **caractérisé en ce que** lesdits au moins deux détecteurs de proximité capacitifs (5, 14) présentent chacun une électrode (15, 16), ces électrodes réunies formant une image de champ (6) reproduisant la forme d'un tronçon de la tête.

6. Dossier selon l'une des revendications 3 ou 4, **caractérisé en ce qu'**il est prévu au moins un système de commande (7) pour au moins un moyen d'entraînement (4), qui compare des capacités relevées en tant que grandeurs réelles effectives avec respectivement au moins une grandeur de consigne, pouvant être prescrite, de la capacité pour une position finale ajustée.

7. Dossier selon l'une des revendications 3, 4 ou 6, **caractérisé en ce que** le moyen d'entraînement (4) peut être actionné moyennant un système de commande (7), qui déclenche un déplacement de recherche de l'appuie-tête (1), pouvant être sélectionné.

8. Dossier selon l'une des revendications 4, 6 ou 7, **caractérisé en ce que** le système de commande (7) présente une électronique de préparation de signal et de traitement de signal.

9. Dossier selon l'une des revendications 4, 6, 7 ou 8, **caractérisé en ce que** le système de commande (7) présente une unité de calibrage.

10. Dossier selon la revendication 9, **caractérisé en ce que** l'unité de calibrage est reliée à un dispositif destiné à relever un déverrouillage du véhicule, et **en ce qu'**il est possible de relever la capacité de référence lors du déverrouillage du véhicule.

11. Dossier selon la revendication 9 ou la revendication 10, **caractérisé en ce qu'**il est prévu un dispositif pour la compensation avec une courbe caractéristique de température des condensateurs respectifs.

12. Dossier selon l'une des revendications 9 à 11, **caractérisé en ce que** l'unité de calibrage est configurée pour une détermination de capacité d'un condensateur formé par lesdits au moins deux détecteurs de proximité (5, 14), lorsque l'on relève un déverrouillage du véhicule.
